# EUROPEAN PATENT SPECIFICATION

(11) **EP 3 435 559 B1**
(45) Date of publication and mention of the grant of the patent: **01.04.2020**
(21) Application number: 17183689.3
(22) Date of filing: 28.07.2017
(51) Int. Cl.: H04B 10/114, H04B 10/116

(54) **WIRELESS ELECTRONIC DEVICE, OPERATING ENVIRONMENT AND METHOD**
DRAHTLOSE ELEKTRONISCHE VORRICHTUNG, BETRIEBSUMGEBUNG UND VERFAHREN
DISPOSITIF ÉLECTRONIQUE SANS FIL, ENVIRONNEMENT DE FONCTIONNEMENT ET PROCÉDÉ

(43) Date of publication of application: 30.01.2019
(73) Proprietor: Vestel Elektronik Sanayi ve Ticaret A.S., 45030 Manisa (TR)
(72) Inventor: DÖNER, Cagdas, 45030 Manisa (TR)
(74) Representative: Ascherl, Andreas

(56) References cited:
- WO-A1-2009/032522
- US-A1- 2013 272 223
- US-A1- 2014 208 387
- US-A1- 2016 050 700

## Description

### TECHNICAL FIELD

The invention relates to a wireless electronic device. Further, the present invention relates to an operating environment for a wireless electronic device and a respective method.

### BACKGROUND

Although applicable to any electronic device that allows a user to configure the device, the present invention will mainly be described in conjunction with so called loT devices or Internet-of-Things-devices.

Modern electronic devices may be coupled or interconnected in wireless networks. This is especially true e.g. for so called loT devices that may e.g. communicate via a wireless network, like e.g. a WIFI network. Such loT devices may e.g. be sensor devices, like e.g. temperature sensors, actuator devices, like e.g. lights or motors, or user input devices, like e.g. switches.

Usually these devices are battery operated. Therefore, the energy consumption of such devices is reduced to the minimum to increase the autonomous live of the devices. IoT devices therefore usually comprise processors of low complexity and often lack a user interface that would allow configuring the devices.

It is however necessary to provide users with the option to configure the devices, e.g. to provide network credentials for the wireless network to the devices. One possibility to configure such devices is a pre-operation configuration that may e.g. be performed with a dedicated application on a computer. Usually the device will be coupled to the computer e.g. via a USB cable and the application may then write the configuration parameters to the device. However, this requires a dedicated application as well as a USB interface in the loT device, which increases the complexity of the loT device.

Documents US 2013 / 272 223 A1, US 2014 / 208 387 A1, US 2016 / 050 700 A1, and WO 2009 / 032 522 A1 disclose different methods and systems for optically providing configuration data to an electronic device.

Accordingly, there is a need for allowing a simple configuration of loT devices.

### SUMMARY OF THE INVENTION

The present invention provides an operating environment with the features of claim 1, and a method with the features of claim 9.

The present invention is based on the finding that usually a household will comprise a plurality of different devices that generate light. Some of these devices may be specifically configured to modulate or change the emitted light. This is e.g. the case for smart light bulbs, TV sets, smartphones or tablet PCs. This may even be the case for refrigerators with integrated displays and internet access or any other white goods.

The present invention therefore provides a method of configuring the wireless electronic device indirectly via a device that is already present in e.g. a household.

The wireless electronic device may be any type of wireless electronic device that requires configuration by a user. Such devices may e.g. be called smart devices or loT devices. The wireless electronic device may e.g. be a temperature sensor, a light source, a remote control or any other kind of device that communicates in a wireless network. Usually such devices will not comprise a dedicated user interface that allows performing the configuration of the wireless electronic device.

The present invention therefore provides the wireless electronic device with the optical configuration interface and the control unit that in combination may receive modulated light and demodulate the modulated light to derive the configuration parameters for the wireless electronic device.

The modulated light may e.g. be provided by the light generation device. The light generation device may be any type of light generation device that is capable of modulating the brightness and/or the color of the emitted or generated light. Such a light generation device may e.g. be a light bulb with a control unit, like e.g. a wirelessly controllable light bulbs that comprises a controller and a wireless interface, also called e.g. smart bulbs or smart lights. Such a light generation device may also be e.g. a device with a display, like e.g. a smartphone, a tablet PC or a TV set.

A device with a display may either modulate the backlight intensity of the backlight of the display or may e.g. modulate the light brightness and color by changing the content that is displayed on the screen. The device may e.g. display a black spot or square in an otherwise white display with full backlight level. To modulate the configuration parameters into the emitted light, the device may e.g. turn the square or spot black and white alternatingly with the respective frequency or interval. If a multicolor encoding is used, the device may e.g. display a red, a green and a blue spot or square on the display and modulate the spots or squares accordingly. To reduce interference from further white light that may be emitted by the display, the device may surround the black/white or the three colored spots with e.g. a black margin.

The wireless electronic device may e.g. be put onto, e.g. into contact with, the light generation device, e.g. a light bulb or a screen of the light generation device to receive the modulated light. This reduces interference from ambient light.

Possible configuration parameters for the wireless electronic device may e.g. comprise device IDs, network credentials, and any other configuration parameters, like e.g. time schedules. Time schedules may e.g. be used to trigger smart light bulbs, allow unlocking to electronic locks or the like. Other possible configuration parameters may e.g. comprise MQTT message configurations or the like. In general the configuration parameters may refer to any user configurable aspect of the wireless electronic device.

The present invention provides an easy and quick way of configuring the wireless electronic device without the need to increase the complexity of the wireless electronic device by adding a dedicated user interface. Instead the wireless electronic device may be indirectly configured by other electronic devices that may already be present in a household. The present invention therefore allows easily integrating new wireless electronic devices in an already present infrastructure, like e.g. a smart home.

It is understood, that the control unit may e.g. be a processing device, like e.g. a microcontroller or a microprocessor. The control unit may e.g. comprise a memory that comprises executable instructions and cause the control unit to perform the functions described in this application regarding the control unit. The same applies to any control device that may be present in the light generation device.

Further embodiments of the present invention are subject of the further subclaims and of the following description, referring to the drawings.

In an embodiment, the wireless electronic device comprises a wireless communication interface configured to communicate in the wireless network. The control unit may be coupled to the wireless communication interface and may be configured to derive network credentials from the digital data and to configure the wireless communication interface to use the derived credentials for communication in the wireless network.

The wireless communication interface allows the wireless electronic device to engage in communication with other devices. Sensors of a smart home may e.g. provide sensor data to a central server. Such sensors may e.g. be temperature sensors, light intensity sensors, rain sensors, window state sensors or the like.

Since the wireless electronic device will usually not comprise a wired data interface, at least not for permanent communication, the wireless communication interface may be the only communication interface of the wireless electronic device available to engage in communication with other devices.

Usually wireless communication networks will not be open for access by any device without prior authentication. Therefore, the wireless electronic device may require the necessary network credentials to access the wireless network via the wireless communication interface. In an embodiment, the configuration parameters may comprises network credentials for a wireless network.

The wireless communication interface may e.g. be a WIFI interface, a Bluetooth interface, a ZigBee interface or any other electromagnetic-based wireless interface. The wireless communication interface may however also be e.g. a light-based interface, like e.g. a LI-FI interface.

In a further embodiment, the optical configuration interface may comprise a photo-resistor based brightness and/or color sensor for sensing brightness and/or color changes and providing a respective brightness and/or color signal to the control unit.

Photo-resistor sensors devices, like e.g. photo diodes, are very simple devices that may easily be integrated into the wireless electronic device. Usually these devices or sensors will provide an output voltage or current that varies with the intensity of the incident light. Such changes of the output voltage or current may then be sensed and evaluated in the control unit. The control unit may e.g. comprise a comparator input that may compare the output voltage or current of the photo-resistor based sensor with a threshold value. The control unit may then detect a high brightness level if the output voltage or current is higher than a predetermined threshold value. This threshold value may e.g. be predetermined during development or prototyping of the wireless electronic device and may e.g. vary depending on the model of the photo-resistor based sensor and the mechanical surroundings of the photo-resistor based sensor. The mechanical surroundings may e.g. provide an optical shielding for the photo-resistor based sensor that blocks incident light from the sides of the photo-resistor based sensor and only allows incident light from the front side to reach the photo-resistor based sensor.

Further, it is easily possibly to provide multiple different photo-resistor based sensors. The single sensors may then e.g. be provided with individual color filters. This allows performing a parallel communication with multiple colors based on intensity or brightness modulations of the single colors.

Usually a display will combine red, green and blue light to generate a single color pixel. Therefore, most displays may generate genuine red, green and blue light. Therefore, the optical configuration interface may comprise three different sensors, e.g. a red sensitive photo-resistor based sensor, a green sensitive photo-resistor based sensor and a blue sensitive photo-resistor based sensor.

In an embodiment, the control unit may comprise a signal decoder configured to decode the brightness and/or color signal as an On-Off Keying, OOK, signal or as a frequency shift keying, FSK, signal and convert the decoded brightness and/or color signal into a bit stream,
On-Off Keying refers to an encoding scheme that uses the presence and absence of a signal, e.g. light, to indicate binary ones and zeros. This means that the presence of light may indicated a binary one and the absence of light may indicate a binary zero. To improve immunity of the emitted signal against e.g. incident ambient light, the signal in the "on" phase may be modulated with a predetermined frequency. This allows separating the "on" signal from the ambient light in the receiver.

Frequency shift keying in contrast to On-Off Keying uses a frequency modulated signal for transmitting binary ones as well as binary zeros. In the frequency shift keying scheme, binary ones and zeros are differentiated by different frequencies. This means that a binary one is emitted as a signal with a first predetermined frequency and a binary zero is emitted as a signal with a second predetermined frequency.

It is understood, that an OOK transmission as well as a FSK transmission may be initiated or opened by a specific start sequence. In addition, the transmission may be terminated or closed with a specific end sequence. The start sequence may e.g. comprise a specific symbol arrangement that e.g. is only present in the start sequence and may be identified in the receiver. Further, the start sequence may be used to determine the timing details of the OOK or FSK modulated signal.

In another embodiment, the control unit may be especially configured to interpret at least part of the bit stream as encoded characters, especially as ASCII encoded characters or as UTF encoded characters.

Usually the configuration parameters will be provided by the user as user readable input, e.g. as characters. Such characters may be encoded according to a specific encoding scheme. The ASCII encoding scheme or UTF encoding scheme may e.g. be used to encode the configuration parameters as characters. It is however understood, that any other encoding scheme may also be used. As an alternative or in addition, the binary data may directly represent the configuration parameters. There is e.g. no need to convert a channel number or number values in general into characters first. Instead number values may directly be transmitted as binary values.

It is further understood, that the encoded characters may be embedded in preceding and trailing data. Such data may e.g. comprise error correction data, header data, trailing parity data, a start signal, a stop signal and the like.

In an embodiment, the wireless electronic device may comprise a user interface configured to receive a user input and configured to initiate the optical configuration interface sensing the brightness and/or color changes and the control unit deriving the configuration parameters from the digital data.

The wireless electronic device may e.g. be configured to enter a configuration mode automatically and try to receive the configuration parameters after e.g. providing electronic power to the wireless electronic device. This configuration mode may e.g. be terminated after a specific timeout without receiving any configuration parameter. If no configuration parameters are received within this time period, standard configuration parameters or formerly received configuration parameters may be used by the wireless electronic device.

The wireless electronic device may however also comprise a user interface that allows a user to dedicatedly initiate or start the configuration mode. The user interface may e.g. be a switch or button. Such a switch or button may e.g. be connected to the control unit. A push of the button may then set the control unit into the configuration mode. It is understood, that a timeout may be implemented and that the push of the button needs to be longer than the timeout. A short accidental push of the button will therefore not put the control unit into the configuration mode.

Other types of user interfaces may e.g. comprise a vibration sensor or a microphone. The vibration sensor may e.g. be used to detect a specific vibration pattern to activate the configuration mode. The user may e.g. be required to shake the wireless electronic device three times to activate the configuration mode. The microphone may be used to listen to the user's voice and e.g. detected key words that initiate the configuration mode.

When activating the configuration mode, the wireless electronic device may announce this information to the operating environment. The communication possibilities of the wireless electronic device will however be limited. Since the wireless electronic device may not yet have the necessary credentials to access the wireless network, the wireless electronic device may initiate a communication in the wireless network that does not require such credentials. The wireless electronic device may e.g. use the wireless network interface to open an access point, especially with a WIFI interface. This access point may then e.g. be detected by light generation device and the light generation device may automatically start modulating light brightness and/or color.

In a further embodiment, the light generation device may comprise a wireless communication interface and may be configured to monitor for the presence of a wireless signal, especially a WIFI access point signal, of the wireless electronic device. The light generation device may be configured to start providing the configuration parameters to the wireless electronic device after detecting the wireless signal of the wireless electronic device.

In another embodiment, the light generation device may comprise an encoder that is configured to encode the configuration parameters by encoding the generated light as an On-Off Keying, OOK, signal or as a frequency shift keying, FSK, signal.

The encoder may e.g. be a dedicated control device. If the light generation device is e.g. a "smart" light bulb, the encoder may be provided in the supply of the light generation device. If the light generation device is an electronic device with a display, the encoder may e.g. be provided in the control of the backlight of the display. As an alternative, the encoder may be provided in the signal chain of the display and overlay the image shown on the display with the modulated light, e.g. at a specific location in the form of a spot or square that shows the modulated light. The key difference is that in an embodiment the backlight may be modulated and in the other embodiment, the display content is modulated at least in a section of the display.

Using the light color to modulate data, e.g. multiple independent channels may be used. For example the wireless electronic device may comprise instead of a simple brightness sensor a CMOS or CCD camera sensor, e.g. with only one red pixel, one green pixel and one blue pixel. The colors red, green and blue may then be used as independent channels that may transmit data e.g. as OOK or FSK modulated data.

In an embodiment, the configuration parameters may be provided to the light generation device by a user.

The configuration parameters may e.g. be present in the light generation device as the configuration parameters that was provided by a user and that the light generation device itself uses to access the wireless network, e.g. the SSID and password for a WIFI network. Especially with a TV set, like e.g. a smart TV, as light generation device, the TV set may also comprise a WIFI interface. To access the WIFI network, the TV set will therefore comprise the network credentials and may also provide the credentials to the wireless electronic device.

In another embodiment, the operating environment may comprise a configuration server configured to provide the configuration parameters to the light generation device, e.g. in the form of an http document that is rendered on a display of the light generation device.

The configuration server may e.g. be a web server that is accessible via a data network, e.g. the internet or a local intranet.

The advantage of using an http document is that such a document may be provided with an interactive user interface and that an http document may be displayed on most modern electronic devices that comprise a display. Such devices may e.g. be the above already mentioned smart TV sets, mobile phones, tablet PCs and the like. It is however understood, that instead of an http document any other type of document or file may be provided that may be displayed on the display of the light generation device.

The configuration server may e.g. comprise in a simple form a single http document that when rendered displays an image on the display. The image may e.g. be a pre-rendered animated image, e.g. an animated GIF. The animation of the animated image may e.g. be such that the light emitted by the display is at least locally modulated such that configuration parameters may be transmitted to the wireless electronic device. This means that the animated image when displayed may provide an OOK modulated or a FSK modulated light signal to the wireless electronic device.

It is however also possible, that the http document allows a user to select or provide values for various configuration parameters via forms in the http document. The server may then render a respective animated image. As an alternative, encoding and modulating the light for the wireless electronic device may also be performed programmatically in the http document, e.g. via JavaScript or any other client side programming. The transmission of the parameters may therefore be performed as explained, e.g. via a server-side generate image or via a client-side generated image or modulated area on the screen. In the http document a cell of a table or any other element may e.g. be used to modulate the light. To this end e.g. the background color of the respective element may e.g. be programmatically changed from black to white and vice versa as required. It is understood, that this may also be performed for multiple elements with different colors.

The server may e.g. comprise a device database with information about different wireless electronic devices. A user may select the respective wireless electronic device e.g. in a menu or by navigating to a device-individual http page or address. After the device selection by the user, the server may automatically load all possible configuration parameters or a filtered subset and display the available configuration parameters to the user. The user may then use the http document, e.g. forms provided in the rendered http document, to modify or input the configuration parameters.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
Fig. 1 shows a block diagram of an embodiment of an operating environment according to the present invention;
Fig. 2 shows a block diagram of another embodiment of an operating environment according to the present invention; and
Fig. 3 shows a flow diagram of an embodiment of a method according to the present invention.

In the figures like reference signs denote like elements unless stated otherwise.

### DETAILED DESCRIPTION OF THE DRAWINGS

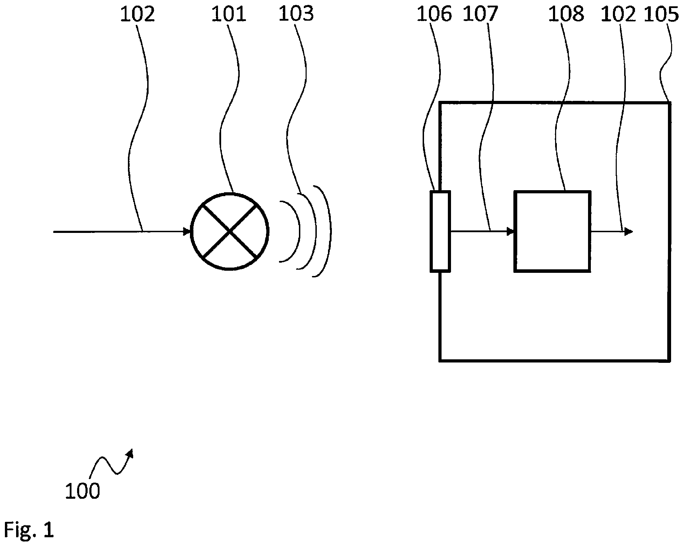

Fig. 1 shows a block diagram of an operating environment 100. The operating environment 100 comprises a light generation device 101 that receives configuration parameters 102 and emits accordingly modulated light 103. The operating environment 100 further comprises a wireless electronic device 105. The wireless electronic device 105 comprises an optical configuration interface 106 that is coupled to a control unit 108.

The wireless electronic device 105 may be configured, e.g. during installation or setup of the wireless electronic device 105 via the light generation device 101.

The light generation device 101 may e.g. generate light 103. The light 103 may be generated based on the configuration parameters 102, i.e. the light 103 may be modulated to transmit the configuration parameters 102. The modulation may e.g. comprise an On-Off-Keying or a Frequency Shift Keying modulation. Such a modulation may be performed by way of modulating the brightness and/or color of the light 103. For parallel data transmission, the brightness of the light 103 of different colors may individually be modulated. Although not explicitly shown, it is understood, that the light generation device 101 may e.g. comprise a control unit or controller that performs the necessary operations to modulate the light 103. Further, it is understood, that the light generation device 101 may e.g. comprise a communication interface for receiving the configuration parameters 102. Such a configuration interface may e.g. be a wired or a wireless configuration interface.

The light 103 is then emitted by the light generation device 101 to the wireless electronic device 105. In the wireless electronic device 105 the light 103 is received by the optical configuration interface 106. The optical configuration interface 106 senses the modulation, e.g. the brightness and/or color changes, of the light 103 and converts the brightness and/or color changes into digital data 107. The digital data 107 is then provided to the control unit 108. The control unit 108 may derive the configuration parameters 102 for the operation of the wireless electronic device 105 from the digital data 107. Deriving refers to extracting the configuration parameters 102 from the digital data 107. The configuration parameters 102 may e.g. provided in the digital data 107 according to a predetermined protocol, e.g. with preceding and trailing data or headers.

The control unit 108 then uses the configuration parameters 102 to configure the wireless electronic device 105 accordingly.

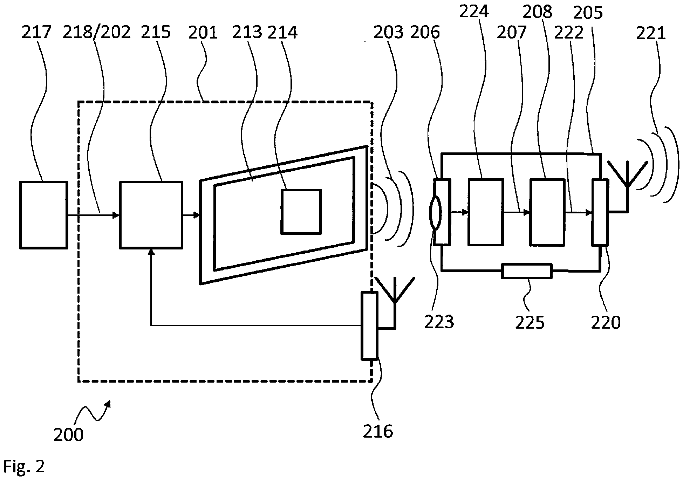

Fig. 2 shows a block diagram of an operating environment 200. The operating environment 200 is based on the operating environment 100. Therefore, the operating environment 200 comprises a light generation device 201 that receives configuration parameters 202 and emits accordingly modulated light 203. The operating environment 200 also comprises a wireless electronic device 205. The wireless electronic device 205 comprises an optical configuration interface 206 that is coupled to a control unit 208.

In the operating environment 200 the light generation device 201 may e.g. be provided as smart TV 201 with the capability to access web pages, i.e. http documents. The smart TV 201 may e.g. be coupled to the internet via a wired or wireless connection. The smart TV 201 may e.g. comprise a processor with an operating system that allows the smart TV 201 to execute certain applications, like the web browser. The smart TV 201 also comprises an encoder 215. This encoder may encode the configuration parameters 202 according to the required encoding scheme, e.g. an OOK encoding scheme or a FSK encoding scheme. It is understood, that the encoder 215 may e.g. be provided as hardware encoder or as software based encoder that is executed by the processor of the smart TV 201.

The configuration parameters 202 may e.g. be provided by a server 217 in the form of an http document 218. This http document 218 may then be displayed on a display 213 of the smart TV 201. It is understood, that the http document 218 may e.g. be rendered on the display 213 of the smart TV 201 and may comprise an area that provides the modulated light 203. The light 203 may e.g. be generated by the server, i.e. offline, and be provided as an animated image that is displayed on the display 213 at the area indicated in the http document 218. The light 203 may however also be generated in the smart TV 201, e.g. via JavaScript that may be embedded in the http document 218. The encoder 215 may e.g. be provided as the respective JavaScript function. It is understood, that the server 217 is just an option for providing the configuration parameters 202 to the smart TV 201. As an alternative, e.g. a dedicated application may be provided in the smart TV 201 or the required functionality may be provided embedded in the smart TV 201, e.g. the operating system of the smart TV 201.

The transmission of the configuration parameters 202 to the wireless electronic device 205 may e.g. be triggered in the operating environment 200 by a wireless signal 221 that the wireless electronic device 205 may emit. This wireless signal 221 may e.g. be the signal of a wireless access point that may be emitted by the wireless electronic device 205. Such a wireless signal 221 may e.g. comprise specific parameters. In the case of a WIFI signal, the wireless signal 221 may e.g. comprise a specific SSID that triggers the transmission of the configuration parameters 202 in the wireless electronic device 205. In order to detect the wireless signal 221, the wireless electronic device 205 may e.g. comprise a wireless interface 216.

The wireless electronic device 205 comprises the optical configuration interface 206. In the optical configuration interface 206 a photo-resistor based sensor 223, like e.g. a photo diode, is provided to receive the light 203. The signal that is generated by the photo-resistor based sensor 223 is then provided to a decoder 224. The decoder 224 will decode the signal from the photo-resistor based sensor 223 and provide respective digital data 207, e.g. in the form of a bit stream. The control unit 208 will then analyze the digital data 207 and derive the configuration parameters 202. In the exemplary embodiment, the configuration parameters 202 may e.g. comprise network credentials 222. The network credentials 222 are provided by the control unit 208 to a network interface 220 of the control unit 208 for communication in a wireless network. The network credentials 222 may e.g. comprise a SSID and a password or key for a WIFI network. It is however understood, that the network credentials 222 may comprise any type of credentials for any type of network, depending on the type of network interface 220.

The wireless electronic device 205 further comprises a user interface 225. The user interface 225 may e.g. be a push button. If a user presses the push button longer than a predetermined amount of time, the wireless electronic device 205 may e.g. be put into the configuration mode. In the configuration mode the control unit 208 may activate the optical configuration interface 206 and the decoder 224 and wait for the modulated light 203.

If no modulated light 203 is received within a predetermined amount of time, the configuration mode may be terminated.

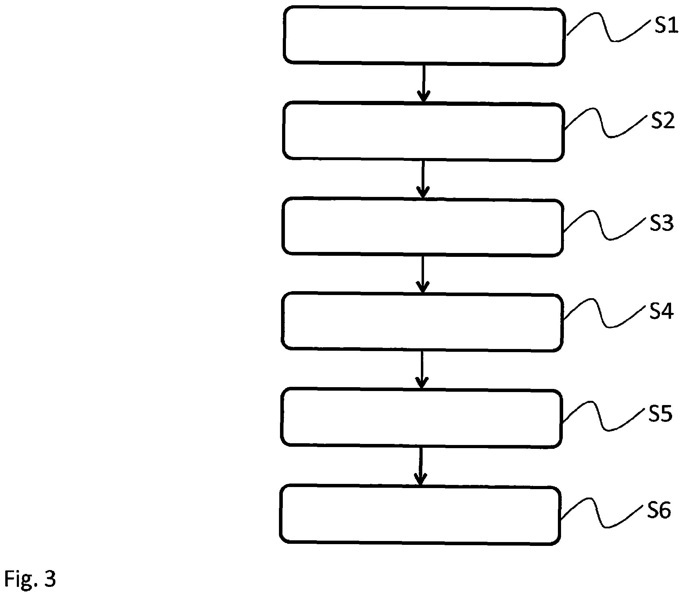

For sake of clarity in the following description of the method based Fig. 3 the reference signs used above in the description of apparatus based Figs. 1 - 2 will be maintained.

Fig. 3 shows a flow diagram of a method for operating a wireless electronic device 105, 205. The method comprises generating S1 light 103, 203, and providing S2 configuration parameters 102, 202, 222 to the wireless electronic device 105, 205 via brightness and/or color changes of the generated light 103, 203, i.e. via a modulation of the light 103, 203.

The configuration parameters 102, 202, 222 may e.g. be provided via a configuration server 217, especially in the form of an http document 218 that is rendered on a display 213.

In the wireless electronic device 105, 205, the method comprises sensing S3 the brightness and/or color changes in the surroundings of the wireless electronic device 105, 205, i.e. the light 103, 203, converting S4 the brightness and/or color changes into digital data 107, 207 in the wireless electronic device 105, 205, and deriving S5 configuration parameters 102, 202, 222 for the wireless electronic device 105, 205 from the digital data 107, 207. Further, the method comprises configuring S6 the wireless electronic device 105, 205 according to the derived configuration parameters 102, 202, 222.

The method may comprise providing the configuration parameters 102, 202, 222 as network credentials 222 for a wireless network. Deriving S5 may then comprise deriving the network credentials 222 from the digital data 107, 207 and configuring a wireless communication interface 220 of the wireless electronic device 105, 205 to use the derived credentials for communication in the wireless network.

Providing S2 configuration parameters 102, 202, 222 may for example comprise monitoring for the presence of a wireless signal 221, especially a WIFI access point signal, of the wireless electronic device 105, 205, and starting providing the configuration parameters 102, 202, 222 to the wireless electronic device 105, 205 after detecting the wireless signal 221 of the wireless electronic device 105, 205.

Providing S2 configuration parameters 102, 202, 222 may further comprise encoding the configuration parameters 102, 202, 222 by encoding the generated light 103, 203 as an On-Off Keying signal or as a frequency shift keying signal. Converting S4 may comprise decoding the brightness and/or color signal as an On-Off Keying signal or as a frequency shift keying signal, respectively, and converting the decoded brightness and/or color signal into a bit stream. Deriving may comprise interpreting at least part of the bit stream as encoded characters, especially as ASCII encoded characters or as UTF encoded characters.

The method may also comprise receiving a user input at the wireless electronic device 105, 205 and initiating sensing S3 the brightness and/or color changes, converting S4, deriving S5, and configuring S6 in the wireless electronic device 105, 205 after receiving the user input.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

Thus, the present invention provides a wireless electronic device 105, 205 for communicating in a wireless network, the wireless electronic device 105, 205 comprising an optical configuration interface 106, 206 configured to sense brightness and/or color changes in the surroundings of the wireless electronic device 105, 205 and to convert the brightness and/or color changes into digital data 107, 207, and a control unit 108, 208 coupled to the optical configuration interface 106, 206 and configured to derive configuration parameters 102, 202, 222 for the wireless electronic device 105, 205 from the digital data 107, 207 and to configure the wireless electronic device 105, 205 according to the configuration parameters 102, 202, 222. Further, the present invention provides an operating environment 100, 200 and a respective method.

### List of reference signs

- 100, 200: operating environment
- 101, 201: light generation device
- 102, 202: configuration parameter
- 103, 203: light

- 105, 205: wireless electronic device
- 106, 206: optical configuration interface
- 107,207: digital data
- 108, 208: control unit

- 213: display
- 214: modulation area
- 215: encoder
- 216: wireless communication interface
- 217: configuration server
- 218: http document

- 220: wireless communication interface
- 221: wireless signal
- 222: network credentials
- 223: photo-resistor based sensor
- 224: decoder
- 225: user interface

## Claims

1. Operating environment (100, 200) for electronic devices, the operating environment (100, 200) comprising:
a wireless electronic device (105, 205), the wireless electronic device (105, 205) comprising an optical configuration interface (106, 206) configured to sense brightness and/or color changes in the surroundings of the wireless electronic device (105, 205) and to convert the brightness and/or color changes into digital data (107, 207), and a control unit (108, 208) coupled to the optical configuration interface (106, 206) and configured to derive configuration parameters (102, 202, 222) for the wireless electronic device (105, 205) from the digital data (107, 207) and to configure the wireless electronic device (105, 205) according to the configuration parameters (102, 202, 222),
a light generation device (101, 201) configured to generate light (103, 203) and to provide configuration parameters (102, 202, 222) to the wireless electronic device (105, 205) via brightness and/or color changes of the generated light (103, 203), and a configuration server (217) configured to provide the configuration parameters (102, 202, 222) to the light generation device (101, 201) in the form of an http document (218) wherein the light generation device (101, 201) comprises a display (213) configured to display said http document to provide said configuration parameters (102, 202, 222).

2. Operating environment (100, 200) according to claim 1, wherein the light generation device (101, 201) comprises an encoder (215) that is configured to encode the configuration parameters (102, 202, 222) by encoding the generated light (103, 203) as an On-Off Keying signal or as a frequency shift keying signal.

3. Operating environment (100, 200) according to any one of claims 1 and 2, wherein the light generation device (101, 201) comprises a wireless communication interface (216) and is configured to monitor for the presence of a wireless signal (221), especially a WIFI access point signal, of the wireless electronic device (105, 205), wherein the light generation device (101, 201) is configured to start providing the configuration parameters (102, 202, 222) to the wireless electronic device (105, 205) after detecting the wireless signal (221) of the wireless electronic device (105, 205).

4. Operating environment (100, 200) according to any one of claims 1 to 3, wherein the configuration parameters (102, 202, 222) are provided to the light generation device (101, 201) by a user, and/or
wherein the configuration parameters (102, 202, 222) especially comprise network credentials (222) for a wireless network.

5. Operating environment (100, 200) according to any one of the preceding claims, the wireless electronic device (105, 205) comprising a wireless communication interface (220) configured to communicate in the wireless network, wherein the control unit (108, 208) is coupled to the wireless communication interface (220) and is configured to derive network credentials (222) from the digital data (107, 207) and to configure the wireless communication interface (220) to use the derived credentials for communication in the wireless network.

6. Operating environment (100, 200) according to any one of the preceding claims, wherein the optical configuration interface (106, 206) of the wireless electronic device (105, 205) comprises a photo-resistor based brightness and/or color sensor (223) for sensing brightness and/or color changes and providing a respective brightness and/or color signal to the control unit (108, 208).

7. Operating environment (100, 200) according to any one of the preceding claims, wherein the control unit (108, 208) of the wireless electronic device (105, 205) comprises a signal decoder (224) configured to decode the brightness and/or color signal as an On-Off Keying signal or as a frequency shift keying signal and convert the decoded brightness and/or color signal into a bit stream,
wherein the control unit (108, 208) is especially configured to interpret at least part of the bit stream as encoded characters, especially as ASCII encoded characters or as UTF encoded characters.

8. Operating environment (100, 200) according to any one of the preceding claims, the wireless electronic device (105, 205) comprising a user interface (225) configured to receive a user input and configured to initiate the optical configuration interface (106, 206) sensing the brightness and/or color changes and the control unit (108, 208) deriving the configuration parameters (102, 202, 222) from the digital data (107, 207).

9. Method for operating a wireless electronic device (105, 205) in an operating environment (100, 200) according to any one of claims 1 - 8, the method comprising:
generating (S1) light (103, 203),
providing (S2) configuration parameters (102, 202, 222) to the wireless electronic device (105, 205) via brightness and/or color changes of the generated light (103, 203),
sensing (S3) the brightness and/or color changes in the surroundings of the wireless electronic device (105, 205),
converting (S4) the brightness and/or color changes into digital data (107, 207) in the wireless electronic device (105, 205),
deriving (S5) configuration parameters (102, 202, 222) for the wireless electronic device (105, 205) from the digital data (107, 207), and
configuring (S6) the wireless electronic device (105, 205) according to the derived configuration parameters (102, 202, 222),
wherein the configuration parameters (102, 202, 222) are provided to the wireless electronic device (105, 205) via a configuration server (217), in the form of an http document (218) that is rendered on a display (213).

10. Method according to claim 9, wherein providing configuration parameters (102, 202, 222) comprises providing network credentials (222) for a wireless network, and wherein deriving comprises deriving the network credentials (222) from the digital data (107, 207) and configuring a wireless communication interface (220) of the wireless electronic device (105, 205) to use the derived credentials for communication in the wireless network,
wherein providing configuration parameters (102, 202, 222) especially comprises monitoring for the presence of a wireless signal (221), especially a WIFI access point signal, of the wireless electronic device (105, 205), and starting providing the configuration parameters (102, 202, 222) to the wireless electronic device (105, 205) after detecting the wireless signal (221) of the wireless electronic device (105, 205).

11. Method according to any one of the preceding claims 9 and 10, wherein providing configuration parameters (102, 202, 222) comprises encoding the configuration parameters (102, 202, 222) by encoding the generated light (103, 203) as an On-Off Keying signal or as a frequency shift keying signal, and
wherein converting comprises decoding the brightness and/or color signal as an On-Off Keying signal or as a frequency shift keying signal, respectively, and converting the decoded brightness and/or color signal into a bit stream, and wherein deriving especially comprises interpreting at least part of the bit stream as encoded characters, especially as ASCII encoded characters or as UTF encoded characters.

12. Method according to any one of the preceding claims 9 to 11, comprising receiving a user input at the wireless electronic device (105, 205) and initiating sensing the brightness and/or color changes, and deriving, and configuring in the wireless electronic device (105, 205) after receiving the user input.

## Patentansprüche

1. Betriebsumgebung (100, 200) für elektronische Geräte, wobei die Betriebsumgebung (100, 200) umfasst:
eine drahtlose elektronische Vorrichtung (105, 205), wobei die drahtlose elektronische Vorrichtung (105, 205) eine optische Konfigurationsschnittstelle (106, 206) umfasst, die so konfiguriert ist, dass sie Helligkeits- und/oder Farbänderungen in der Umgebung der drahtlosen elektronischen Vorrichtung (105, 205) erfasst und die Helligkeits- und/oder Farbänderungen in digitale Daten (107, 207) umwandelt, und eine Steuereinheit (108, 208), die mit der optischen Konfigurationsschnittstelle (106, 206) gekoppelt und so konfiguriert ist, dass sie Konfigurationsparameter (102, 202, 222) für die drahtlose elektronische Vorrichtung (105, 205) aus den digitalen Daten (107, 207) ableitet und die drahtlose elektronische Vorrichtung (105, 205) entsprechend den Konfigurationsparametern (102, 202, 222) konfiguriert,
eine Lichterzeugungsvorrichtung (101, 201), die so konfiguriert ist, dass sie Licht (103, 203) erzeugt und Konfigurationsparameter (102, 202, 222) an die drahtlose elektronische Vorrichtung (105, 205) über Helligkeits- und/oder Farbänderungen des erzeugten Lichts (103, 203) liefert, und
einen Konfigurationsserver (217), der konfiguriert ist, um die Konfigurationsparameter (102, 202, 222) an die Lichterzeugungsvorrichtung (101, 201) in Form eines http-Dokuments (218) zu liefern, wobei die Lichterzeugungsvorrichtung (101, 201) eine Anzeige (213) umfasst, die konfiguriert ist, um das http-Dokument anzuzeigen, um die Konfigurationsparameter (102, 202, 222) zu liefern.

2. Betriebsumgebung (100, 200) nach Anspruch 1, wobei die Lichterzeugungsvorrichtung (101, 201) einen Codierer (215) umfasst, der so konfiguriert ist, dass er die Konfigurationsparameter (102, 202, 222) durch Codieren des erzeugten Lichts (103, 203) als ein On-Off-Keying-Signal oder als ein Frequenzumtastungssignal codiert.

3. Betriebsumgebung (100, 200) nach einem der Ansprüche 1 und 2, wobei die Lichterzeugungsvorrichtung (101, 201) eine drahtlose Kommunikationsschnittstelle (216) umfasst und so konfiguriert ist, dass sie das Vorhandensein eines drahtlosen Signals (221), insbesondere eines WIFI-Zugangspunktsignals, der drahtlosen elektronischen Vorrichtung (105, 205) überwacht, wobei die Lichterzeugungsvorrichtung (101, 201) so konfiguriert ist, dass sie nach dem Erfassen des drahtlosen Signals (221) der drahtlosen elektronischen Vorrichtung (105, 205) mit der Bereitstellung der Konfigurationsparameter (102, 202, 222) an die drahtlose elektronische Vorrichtung (105, 205) beginnt.

4. Betriebsumgebung (100, 200) nach einem der Ansprüche 1 bis 3, wobei die Konfigurationsparameter (102, 202, 222) der Lichterzeugungsvorrichtung (101, 201) von einem Benutzer bereitgestellt werden, und/oder
wobei die Konfigurationsparameter (102, 202, 222) insbesondere Netzwerk-Zugangsdaten (222) für ein drahtloses Netzwerk umfassen.

5. Betriebsumgebung (100, 200) gemäß einem der vorstehenden Ansprüche, wobei die drahtlose elektronische Vorrichtung (105, 205) eine drahtlose Kommunikationsschnittstelle (220) umfasst, die konfiguriert ist, um in dem drahtlosen Netzwerk zu kommunizieren, wobei die Steuereinheit (108, 208) mit der drahtlosen Kommunikationsschnittstelle (220) gekoppelt ist und konfiguriert ist, um Netzwerk-Zugangsdaten (222) aus den digitalen Daten (107, 207) abzuleiten und die drahtlose Kommunikationsschnittstelle (220) zu konfigurieren, um die abgeleiteten Zugangsdaten für die Kommunikation in dem drahtlosen Netzwerk zu verwenden.

6. Betriebsumgebung (100, 200) gemäß einem der vorstehenden Ansprüche, wobei die optische Konfigurationsschnittstelle (106, 206) der drahtlosen elektronischen Vorrichtung (105, 205) einen auf einem Fotowiderstand basierenden Helligkeits-und/oder Farbsensor (223) zum Erfassen von Helligkeits- und/oder Farbänderungen und zum Bereitstellen eines entsprechenden Helligkeits- und/oder Farbsignals an die Steuereinheit (108, 208) umfasst.

7. Betriebsumgebung (100, 200) gemäß einem der vorstehenden Ansprüche, wobei die Steuereinheit (108, 208) der drahtlosen elektronischen Vorrichtung (105, 205) einen Signaldecoder (224) umfasst, der so konfiguriert ist, dass er das Helligkeits-und/oder Farbsignal als ein On-Off-Keying-Signal oder als ein Frequenzumtastungssignal decodiert und das decodierte Helligkeits- und/oder Farbsignal in einen Bitstrom umwandelt,
wobei die Steuereinheit (108, 208) insbesondere so konfiguriert ist, dass sie zumindest einen Teil des Bitstroms als kodierte Zeichen, insbesondere als ASCII-kodierte Zeichen oder als UTF-kodierte Zeichen interpretiert.

8. Betriebsumgebung (100, 200) gemäß einem der vorstehenden Ansprüche, wobei die drahtlose elektronische Vorrichtung (105, 205) eine Benutzerschnittstelle (225) umfasst, die so konfiguriert ist, dass sie eine Benutzereingabe empfängt, und so konfiguriert ist, dass sie das Erfassen der Helligkeits- und/oder Farbänderungen durch die optische Konfigurationsschnittstelle (106, 206) initiiert, und die Steuereinheit (108, 208) veranlasst, die Konfigurationsparameter (102, 202, 222) aus den digitalen Daten (107, 207) abzuleiten.

9. Verfahren zum Betreiben einer drahtlosen elektronischen Vorrichtung (105, 205) in einer Betriebsumgebung (100, 200) nach einem der Ansprüche 1 bis 8, wobei das Verfahren umfasst:
Erzeugen (S1) von Licht (103, 203),
Bereitstellen (S2) von Konfigurationsparametern (102, 202, 222) für das drahtlose elektronische Gerät (105, 205) über Helligkeits- und/oder Farbänderungen des erzeugten Lichts (103, 203),
Erfassen (S3) der Helligkeits- und/oder Farbänderungen in der Umgebung des drahtlosen elektronischen Geräts (105, 205),
Umwandeln (S4) der Helligkeits- und/oder Farbänderungen in digitale Daten (107, 207) im drahtlosen elektronischen Gerät (105, 205),
Ableiten (S5) von Konfigurationsparametern (102, 202, 222) für das drahtlose elektronische Gerät (105, 205) aus den digitalen Daten (107, 207), und
Konfigurieren (S6) des drahtlosen elektronischen Geräts (105, 205) entsprechend der abgeleiteten Konfigurationsparameter (102, 202, 222),
wobei die Konfigurationsparameter (102, 202, 222) dem drahtlosen elektronischen Gerät (105, 205) über einen Konfigurationsserver (217) in Form eines http-Dokuments (218), das auf einem Display (213) dargestellt wird, zur Verfügung gestellt werden.

10. Verfahren nach Anspruch 9, wobei das Bereitstellen von Konfigurationsparametern (102, 202, 222) das Bereitstellen von Netzwerk-Berechtigungsnachweisen (222) für ein drahtloses Netzwerk umfasst, und wobei das Ableiten das Ableiten der Netzwerk-Berechtigungsnachweise (222) aus den digitalen Daten (107, 207) und das Konfigurieren einer drahtlosen Kommunikationsschnittstelle (220) der drahtlosen elektronischen Vorrichtung (105, 205) zur Verwendung der abgeleiteten Berechtigungsnachweise für die Kommunikation in dem drahtlosen Netzwerk umfasst,
wobei das Bereitstellen von Konfigurationsparametern (102, 202, 222) insbesondere die Überwachung auf das Vorhandensein eines drahtlosen Signals (221), insbesondere eines WIFI-Zugangspunktsignals, der drahtlosen elektronischen Vorrichtung (105, 205) umfasst, und das Starten des Bereitstellens der Konfigurationsparameter (102, 202, 222) an die drahtlose elektronische Vorrichtung (105, 205) nach dem Erfassen des drahtlosen Signals (221) der drahtlosen elektronischen Vorrichtung (105, 205).

11. Verfahren nach einem der vorhergehenden Ansprüche 9 und 10, wobei das Bereitstellen von Konfigurationsparametern (102, 202, 222) das Codieren der Konfigurationsparameter (102, 202, 222) durch Codieren des erzeugten Lichts (103, 203) als ein On-Off-Keying-Signal oder als ein Frequenzumtastsignal umfasst, und
wobei das Umwandeln die Dekodierung des Helligkeits- und/oder Farbsignals als On-Off-Keying-Signal bzw. als Frequenzumtastungssignal und die Konvertierung des dekodierten Helligkeits- und/oder Farbsignals in einen Bitstrom umfasst, und wobei das Ableiten insbesondere die Interpretation zumindest eines Teils des Bitstroms als kodierte Zeichen, insbesondere als ASCII-kodierte Zeichen oder als UTF-kodierte Zeichen, umfasst.

12. Verfahren nach einem der vorhergehenden Ansprüche 9 bis 11, umfassend das Empfangen einer Benutzereingabe an der drahtlosen elektronischen Vorrichtung (105, 205) und das Auslösen der Erfassung der Helligkeits- und/oder Farbänderungen, und das Ableiten und Konfigurieren in der drahtlosen elektronischen Vorrichtung (105, 205) nach dem Empfang der Benutzereingabe.

## Revendications

1. Environnement d'exploitation (100, 200) pour les appareils électroniques, l'environnement d'exploitation (100, 200) comprenant :
un dispositif électronique sans fil (105, 205), le dispositif électronique sans fil (105, 205) comprenant une interface de configuration optique (106, 206) configurée pour détecter les changements de luminosité et/ou de couleur dans l'environnement du dispositif électronique sans fil (105, 205) et pour convertir les changements de luminosité et/ou de couleur en données numériques (107, 207), et une unité de commande (108, 208) couplée à l'interface de configuration optique (106, 206) et configurée pour dériver des paramètres de configuration (102, 202, 222) pour le dispositif électronique sans fil (105, 205) à partir des données numériques (107, 207) et pour configurer le dispositif électronique sans fil (105, 205) en fonction des paramètres de configuration (102, 202, 222),
un dispositif de génération de lumière (101, 201) configuré pour générer de la lumière (103, 203) et pour fournir des paramètres de configuration (102, 202, 222) au dispositif électronique sans fil (105, 205) via des changements de luminosité et/ou de couleur de la lumière générée (103, 203), et
un serveur de configuration (217) configuré pour fournir les paramètres de configuration (102, 202, 222) au dispositif de génération de lumière (101, 201) sous la forme d'un document http (218), dans lequel le dispositif de génération de lumière (101, 201) comprend un affichage (213) configuré pour afficher ledit document http afin de fournir lesdits paramètres de configuration (102, 202, 222).

2. Environnement de fonctionnement (100, 200) selon la revendication 1, dans lequel le dispositif de génération de lumière (101, 201) comprend un encodeur (215) qui est configuré pour coder les paramètres de configuration (102, 202, 222) en codant la lumière générée (103, 203) comme un signal de modulation marche-arrêt ou comme un signal de modulation par déplacement de fréquence.

3. Environnement de fonctionnement (100, 200) selon l'une quelconque des revendications 1 et 2, dans lequel le dispositif de génération de lumière (101, 201) comprend une interface de communication sans fil (216) et est configuré pour surveiller la présence d'un signal sans fil (221), en particulier un signal de point d'accès WIFI, du dispositif électronique sans fil (105, 205), dans lequel le dispositif de génération de lumière (101, 201) est configuré pour commencer à fournir les paramètres de configuration (102, 202, 222) au dispositif électronique sans fil (105, 205) après avoir détecté le signal sans fil (221) du dispositif électronique sans fil (105, 205).

4. Environnement d'exploitation (100, 200) selon l'une quelconque des revendications 1 à 3, dans lequel les paramètres de configuration (102, 202, 222) sont fournis au dispositif de génération de lumière (101, 201) par un utilisateur, et/ou
où les paramètres de configuration (102, 202, 222) comprennent notamment les informations d'identification du réseau (222) pour un réseau sans fil.

5. Environnement d'exploitation (100, 200) selon l'une quelconque des revendications précédentes, le dispositif électronique sans fil (105, 205) comprenant une interface de communication sans fil (220) configurée pour communiquer dans le réseau sans fil, dans lequel l'unité de commande (108, 208) est couplée à l'interface de communication sans fil (220) et est configurée pour dériver des références de réseau (222) à partir des données numériques (107, 207) et pour configurer l'interface de communication sans fil (220) afin d'utiliser les références dérivées pour la communication dans le réseau sans fil.

6. Environnement de fonctionnement (100, 200) selon l'une quelconque des revendications précédentes, dans lequel l'interface de configuration optique (106, 206) du dispositif électronique sans fil (105, 205) comprend un capteur de luminosité et/ou de couleur à base de photorésistance (223) pour détecter les changements de luminosité et/ou de couleur et fournir un signal de luminosité et/ou de couleur respectif à l'unité de commande (108, 208).

7. Environnement de fonctionnement (100, 200) selon l'une quelconque des revendications précédentes, dans lequel l'unité de commande (108, 208) du dispositif électronique sans fil (105, 205) comprend un décodeur de signal (224) configuré pour décoder le signal de luminosité et/ou de couleur en tant que signal de modulation marche-arrêt ou en tant que signal de modulation par déplacement de fréquence et pour convertir le signal de luminosité et/ou de couleur décodé en un flux binaire,
dans lequel l'unité de commande (108, 208) est spécialement configurée pour interpréter au moins une partie du flux binaire comme des caractères codés, en particulier comme des caractères codés ASCII ou comme des caractères codés UTF.

8. Environnement d'exploitation (100, 200) selon l'une quelconque des revendications précédentes, le dispositif électronique sans fil (105, 205) comprenant une interface utilisateur (225) configurée pour recevoir une entrée utilisateur et configurée pour initier l'interface de configuration optique (106, 206) détectant les changements de luminosité et/ou de couleur et l'unité de commande (108, 208) dérivant les paramètres de configuration (102, 202, 222) à partir des données numériques (107, 207).

9. Procédé pour faire fonctionner un dispositif électronique sans fil (105, 205) dans un environnement d'exploitation (100, 200) selon l'une quelconque des revendications 1 à 8, le procédé comprenant :
la génération d'une lumière (S1) (103, 203),
fournir (S2) des paramètres de configuration (102, 202, 222) au dispositif électronique sans fil (105, 205) par le biais de changements de luminosité et/ou de couleur de la lumière générée (103, 203),
la détection (S3) des changements de luminosité et/ou de couleur dans l'environnement du dispositif électronique sans fil (105, 205),
la conversion (S4) des changements de luminosité et/ou de couleur en données numériques (107, 207) dans le dispositif électronique sans fil (105, 205),
la dérivation (S5) des paramètres de configuration (102, 202, 222) pour le dispositif électronique sans fil (105, 205) à partir des données numériques (107, 207), et
en configurant (S6) le dispositif électronique sans fil (105, 205) selon les paramètres de configuration dérivés (102, 202, 222),
dans lequel les paramètres de configuration (102, 202, 222) sont fournis au dispositif électronique sans fil (105, 205) par l'intermédiaire d'un serveur de configuration (217) sous la forme d'un document http (218) qui est rendu sur un écran (213).

10. Procédé selon la revendication 9, dans lequel la fourniture de paramètres de configuration (102, 202, 222) comprend la fourniture de références de réseau (222) pour un réseau sans fil, et dans lequel la dérivation comprend la dérivation des références de réseau (222) à partir des données numériques (107, 207) et la configuration d'une interface de communication sans fil (220) du dispositif électronique sans fil (105, 205) pour utiliser les références dérivées pour la communication dans le réseau sans fil,
dans lequel la fourniture de paramètres de configuration (102, 202, 222) comprend en particulier la surveillance de la présence d'un signal sans fil (221), en particulier un signal de point d'accès WIFI, du dispositif électronique sans fil (105, 205), et le démarrage de la fourniture des paramètres de configuration (102, 202, 222) au dispositif électronique sans fil (105, 205) après avoir détecté le signal sans fil (221) du dispositif électronique sans fil (105, 205).

11. Procédé selon l'une quelconque des revendications 9 et 10 précédentes, dans lequel la fourniture des paramètres de configuration (102, 202, 222) comprend le codage des paramètres de configuration (102, 202, 222) en codant la lumière générée (103, 203) comme un signal de modulation par déplacement de fréquence ou comme un signal de modulation marche-arrêt, et
dans lequel la conversion comprend le décodage du signal de luminosité et/ou de couleur en tant que signal de Keying On-Off ou en tant que signal de Keying par déplacement de fréquence, respectivement, et la conversion du signal de luminosité et/ou de couleur décodé en un flux binaire, et dans lequel la dérivation comprend en particulier l'interprétation d'au moins une partie du flux binaire en tant que caractères codés, en particulier en tant que caractères codés ASCII ou en tant que caractères codés UTF.

12. Procédé selon l'une quelconque des revendications 9 à 11 précédentes, comprenant la réception d'une entrée utilisateur au niveau du dispositif électronique sans fil (105, 205) et l'initiation de la détection des changements de luminosité et/ou de couleur, et la dérivation et la configuration dans le dispositif électronique sans fil (105, 205) après réception de l'entrée utilisateur.
